(19) **Europäisches Patentamt European Patent Office Office européen des brevets**

(11) **EP 1 346 490 B1**

(12) **FASCICULE DE BREVET EUROPEEN**

(45) Date de publication et mention de la délivrance du brevet:
**26.01.2011 Bulletin 2011/04**

(51) Int Cl.:
***H04B 1/707*** (2011.01)

(21) Numéro de dépôt: **01989669.5**

(22) Date de dépôt: **27.12.2001**

(86) Numéro de dépôt international:
**PCT/FR2001/004214**

(87) Numéro de publication internationale:
**WO 2002/054612 (11.07.2002 Gazette 2002/28)**

(54) **CIRCUIT NUMERIQUE D'EMISSION/RECEPTION DANS UN SYSTEME CDMA**

DIGITALE SENDE- UND EMPGANGSSCHALTUNG IN EINEM CDMA SYSTEM

TRANSMISSION/RECEPTION DIGITAL CIRCUIT IN A CDMA SYSTEM

(84) Etats contractants désignés:
**AT BE CH CY DE DK ES FI FR GB GR IE IT LI LU MC NL PT SE TR**

(30) Priorité: **29.12.2000 FR 0017286**

(43) Date de publication de la demande:
**24.09.2003 Bulletin 2003/39**

(73) Titulaire: **Commissariat à l'Energie Atomique 75015 Paris (FR)**

(72) Inventeurs:
• **LATTARD, Didier**
  **F-38680 Rencurel (FR)**
• **LEQUEPEYS, Jean-René**
  **F-38600 Fontaine (FR)**
• **VARREAU, Didier**
  **F-38450 Saint-Georges-de-Commiers (FR)**
• **OUVRY, Laurent**
  **F-38100 Grenoble (FR)**

(74) Mandataire: **Small, Gary James**
  **Carpmaels & Ransford**
  **One Southampton Row**
  **London**
  **WC1B 5HA (GB)**

(56) Documents cités:
**EP-A- 1 033 823     WO-A-96/38930**
**US-A- 4 984 247**

**Description**

**Domaine technique**

L'invention se situe dans le domaine des transmissions numériques par étalement de spectre par séquence directe dans un système AMRC, c'est-à-dire, un système à accès multiples par répartition de codes, synchrone ou quasi-synchrone, technique connue également en anglais par l'abréviation CDMA (pour "Code Division Multiple Access").
L'invention concerne plus particulièrement un circuit numérique d'émission/réception destiné à être monté sur au moins une source et sur au moins un concentrateur échangeant avec chaque source des symboles binaires par une transmission CDMA, ledit circuit comportant un émetteur apte à transmettre lesdits symboles binaires et un récepteur apte à recevoir des symboles transmis.
L'invention trouve des applications dans les systèmes de radiocommunication avec les mobiles, dans les réseaux locaux sans fil ("Wireless Local Area Network"), dans les boucles locales d'abonnés sans fil ("Wireless Local Loop"), dans la télévision câblée, etc ...

**Etat de la technique antérieure**

Un système AMRC synchrone est composé d'un ensemble d'émetteurs, habituellement appelés "modems", et d'un récepteur, habituellement appelé "concentrateur". La transmission d'informations des modems vers le concentrateur se fait à travers une voie dite "montante", et la transmission d'informations du concentrateur vers les modems à travers une voie dite "descendante". Plusieurs modems peuvent démarrer une acquisition simultanément. Pour que la liaison soit synchrone, il faut que les informations relatives à chaque modem, transmises via la voie montante, arrivent au niveau du concentrateur de manière synchronisée, de sorte que les symboles se superposent et les pics de corrélation sur les différents codes soient positionnés au même moment dans la fenêtre symbole.
Lors de la phase d'émission, un ou plusieurs codes sont alloués à chaque modem afin qu'ils transmettent ses informations avec un débit compatible avec sa demande. Les codes utilisés sont parfaitement orthogonaux entre eux, afin que le bruit d'inter-corrélation soit nul quand les codes sont synchronisés. A la réception, le concentrateur décode le signal reçu en utilisant les mêmes codes que ceux des modems afin d'en extraire les informations binaires utiles.
Une réception synchrone des codes émis nécessite l'utilisation d'une horloge symbole ajustée sur une horloge de référence prédéterminée. La synchronisation des différents modems consiste alors à déterminer le décalage de chaque code transmis par rapport à l'horloge de référence et à ajuster l'horloge symbole sur l'horloge de référence.
Des composants sont aujourd'hui disponibles dans le commerce pour gérer une liaison de type CDMA synchrone.
On peut citer par exemple :

- le composant HFA 3860 de la société Harris ;
- le composant SC2001 de la société Sirius Communications.

Le circuit HFA 3860 est orienté essentiellement vers une liaison point-à-point et ne comporte pas de ressources spécifiques pour gérer une liaison dans un système CDMA synchrone.
En outre, dans le composant HFA 3860, l'horloge symbole est fournie dans un préambule de transmission associé au flux de données transmis. Il en résulte une limitation du débit dans la mesure où il occupe une partie de la bande de transmission.
Dans le composant SC2001, la détermination des pics de corrélation sur les différents codes est effectuée par un DSP ("Digital Signal Processing" en langue anglaise) et un microprocesseur externes. La mise en oeuvre de ce circuit est complexe car il n'intègre pas toutes les fonctions nécessaires à la gestion d'une communication CDMA synchrone. Plus particulièrement, ce circuit ne comporte pas de ressource permettant la gestion des horloges symboles, l'estimation du canal de transmission, la démodulation des codes reçus, le calcul des consignes de décalage d'horloge, et ne permet de traiter que deux codes simultanément.
Un but de l'invention est de pallier les inconvénients cités ci-dessus au moyen d'un circuit programmable apte à assurer l'ensemble des fonctions nécessaires pour réaliser l'émission et la réception dans un système CDMA synchrone et de gérer automatiquement de nouveaux accès.
Ces buts sont atteints au moyen d'un circuit numérique comportant un émetteur de symboles préalablement étalés par une pluralité de codes binaires et un récepteur apte à recevoir de tels symboles, **caractérisé en ce que** l'émetteur comporte un premier module destiné à générer au moins un code binaire pour effectuer l'étalement spectral des symboles à émettre et un deuxième module destiné à générer au moins un signal d'horloge interne pour synchroniser la réception des symboles émis par une source, et en ce que ledit récepteur comporte un troisième module destiné à détecter de nouvelles sources d'émission et à générer des signaux de synchronisation et des signaux de commande de puissance correspondant à chaque nouvelle source détectée.

Selon l'invention, ledit récepteur comporte un étage d'entrée, un étage de gestion d'acquisition et un étage de gestion de trafic, l'étage d'entrée comportant un bloc de mise en forme des données reçues, un filtre impulsionnel destiné à limiter le spectre du signal reçu, un étage d'échantillonnage des données filtrées, et transmettant les données filtrées d'une part, à l'étage de gestion d'acquisition qui extrait desdites données les informations de puissance et de décalage temporel des symboles reçus par rapport à une horloge de base du récepteur, et d'autre part, à l'étage de gestion de trafic qui extrait desdites données les informations binaires transmises et les informations de puissance et de décalage temporel des symboles reçus par rapport à l'horloge de base du récepteur.

Selon l'invention, l'étage de gestion d'acquisition comporte un module de démodulation différentielle, un module de génération d'un signal d'acquisition représentatif des signaux de synchronisation et des signaux de commande de puissance correspondant à chaque nouvelle source d'émission, un module de traitement du signal d'acquisition généré.

Selon l'invention, l'étage de gestion de trafic comporte un module de corrélation des données préalablement traitées avec les codes associés à ces données, un module de démodulation différentielle des données corrélées, un module de calcul destiné à déterminer les signaux de synchronisation et les signaux de commande de puissance correspondant à chaque nouvelle source d'émission détectée.

D'autres caractéristiques et avantages de l'invention ressortiront de la description qui va suivre, prise à titre d'exemple non limitatif, en référence aux figures annexées dans lesquelles:

- la figure 1 représente un schéma bloc du circuit selon l'invention ;
- la figure 2 représente un schéma bloc détaillé d'un émetteur intégré au circuit de la figure 1 ;

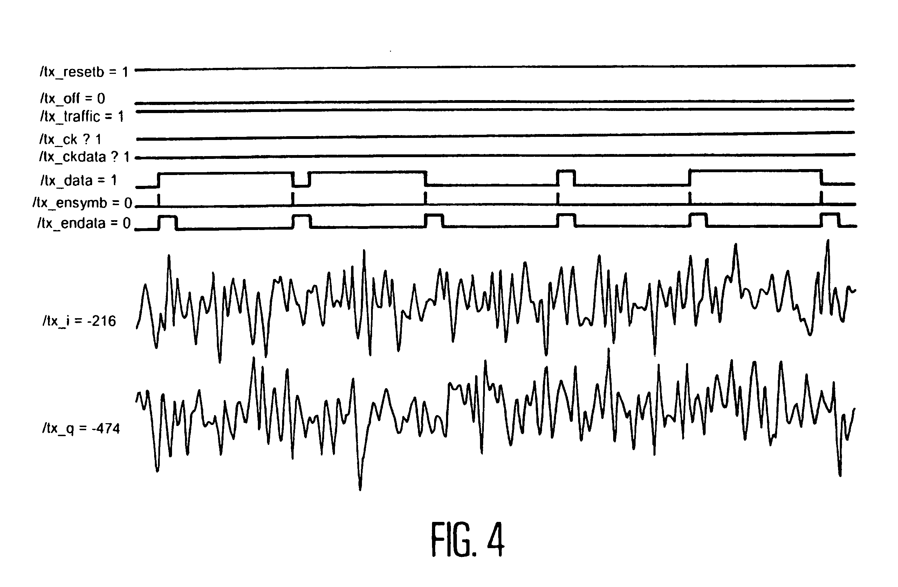

- les figures 3 et 4 représentent des signaux illustrant le fonctionnement de l'émetteur selon l'invention respectivement en mode acquisition et en mode trafic ;
- la figure 5 représente un schéma bloc détaillé d'un récepteur intégré au circuit de la figure 1 ;
- la figure 6 représente un schéma bloc d'un étage d'entrée intégré au récepteur de la figure 5 ;
- la figure 7 représente un schéma bloc d'un étage de gestion d'acquisition intégré au récepteur de la figure 5 ;
- la figure 8 illustre les signaux traités dans l'étage de gestion d'acquisition de la figure 7 ;
- la figure 9 représente l'architecture interne d'un bloc de sélection et d'un bloc de filtrage intégrés dans l'étage de gestion d'acquisition de la figure 7 ;
- la figure 10 représente un schéma bloc détaillé de l'étage de gestion de trafic de la figure 5 ;
- les figures 11 et 12 représentent respectivement la structure de l'architecture interne d'un premier et d'un deuxième blocs de sélection monté en cascade respectivement avec un premier et un deuxième blocs de filtrage équipant l'étage de gestion de trafic de la figure 10 ;
- la figure 13 illustre le codage de la commande de puissance selon l'invention.

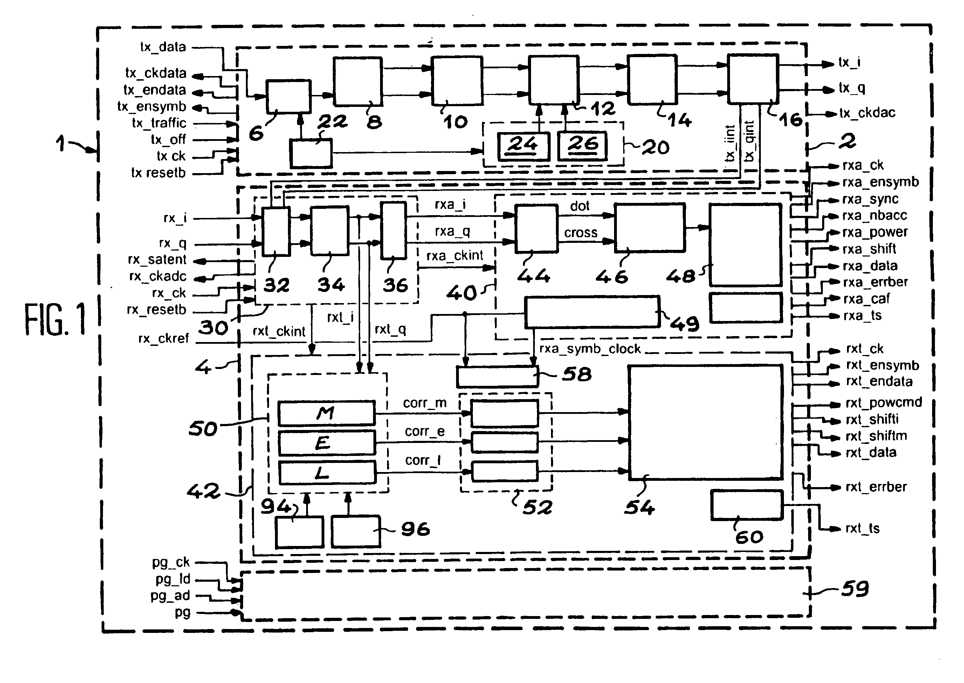

La figure 1 représente un circuit numérique d'émission/réception 1, comportant un émetteur 2 apte à transmettre des symboles binaires étalés par les codes d'étalement et un récepteur 4 apte à recevoir des symboles binaires émises par une source.

Le circuit 1 est destiné à équiper une pluralité de sources dans un système AMRC, telles que par exemple des modems, échangeant des symboles binaires avec un concentrateur. Le concentrateur comportant également un circuit 1 identique à celui des sources.

Le modem qui souhaite démarrer une transmission émet des informations modulées par un code d'acquisition spécifique qui est le même pour tous les modems, les informations arrivant au concentrateur sont démodulées afin d'en extraire:

- le nombre de sources émettrices,
- la puissance de la source principal, c'est-à-dire, de la source requérant la plus forte puissance,
- le décalage des symboles émis par rapport à l'horloge symbole de référence de la source principale, c'est-à-dire, l'horloge qui fournit un signal de synchronisation des symboles émis par la source principale. Cette information de décalage est transmise via la voie descendante, au modem émetteur afin que celui-ci ajuste sa référence symbole sur la référence fournie par l'horloge symbole de la source principale.

L'émetteur 2 comporte un bloc d'entrée de données 6, monté en cascade avec un bloc de parallèlisation des données 8, un bloc de modulation différentielle 10, un bloc d'étalement 12, un bloc de sommation 14 et un premier filtre d'impulsion 16.

Un premier module 20 fournit au bloc d'étalement 12 des codes binaires pour réaliser l'étalement des symboles à émettre et un deuxième module 22 génère un signal d'horloge interne. Le premier module 20 comporte une table 24 comportant une pluralité de codes et un masque 26 d'allocation de codes qui permet de sélectionner les codes utilisés au niveau de l'émetteur 2. Le débit binaire de l'émetteur 2 est directement lié au nombre de codes validés dans le masque 26.

Le récepteur 4 comporte un étage d'entrée 30, un étage de gestion d'acquisition 40 et un étage de gestion de trafic 42. L'étage d'entrée 30 comporte un bloc de mise en forme 32 des signaux reçus, un filtre impulsionnel 34 destiné à limiter le spectre des signaux reçus, un étage d'échantillonnage 36 des signaux filtrés. L'étage d'entrée 30 transmet, d'une part, les données en bande de base préalablement traitées (rxa_i, rxa_q), à l'étage de gestion d'acquisition 40 qui en extrait les informations de puissance et de décalage temporel des symboles reçus par rapport à l'horloge de base du récepteur 4, et d'autre part, les données (rxt_i, rxt_q) à l'étage de gestion de trafic 42 qui en extrait les données binaires transmises et les informations de puissance et de décalage temporel des symboles reçus par rapport à l'horloge de base (rx_ckref) du récepteur 4.

L'étage de gestion d'acquisition 40 comporte un premier module de démodulation différentielle 44, un module de génération d'un signal d'acquisition 46 et un module 48 de traitement du signal généré. Le module 48 permet de détecter l'accès de nouvelles sources au canal de transmission et génère des signaux de synchronisation et des signaux de commande de puissance correspondant à chaque nouvelle source détectée. Un premier bloc de gestion d'horloge permet la génération d'une horloge symbole locale (rxa-symb-clock) et le calcul du décalage temporel des symboles reçus par rapport à l'horloge de référence du récepteur (rx_ckref).

L'étage de gestion de trafic 42 comporte un étage de corrélation 50 comportant une première voie M, une deuxième voie E et une troisième voie L. Les voies M, E et L transmettent des données corrélées respectivement corr_m, corr_e et corr_l à un deuxième étage de démodulation différentielle 52 qui transmet les données démodulées à un étage de calcul 54 destiné à déterminer les signaux de synchronisation et les signaux de commande de puissance correspondant à chaque source d'émission. Un deuxième bloc de gestion d'horloge 58 permet de piloter l'ensemble de l'étage de gestion du trafic 42, soit directement par l'horloge symbole de référence (rx_ckref) : cas d'une application CDMA synchrone, soit par l'horloge symbole locale (rxa_symb_clock) du bloc de gestion de l'acquisition (40) : cas d'une application point à point (liaison asynchrone).

Un module de programmation 59 accessible via une interface simple comportant un bus d'adresse et un bus de données permet de programmer les différents opérateurs du circuit en fonction de l'utilisation souhaitée.

Quatre formats de modulation peuvent être utilisés lors de l'émission : BPSK (pour "Binary Phase Shift Keying" en anglais) DBPSK (pour "Differential Binary Phase Shift Keying" en anglais), QPSK (pour "Quaternary Phase Shift Keying" en anglais), DQPSK (pour "Differential Quaternary Phase Shift Keying" en anglais). Les modulations BPSK et QPSK sont accessibles par programmation. En QPSK, deux bits utiles par symbole et par code sont transmis, ce qui nécessite de regrouper les données entrantes par paquets de deux bits "I" et "Q". En BPSK, un seul bit utile est transmis par symbole et par code. Les données entrantes sont recopiées sur I et Q, donc dans le reste de la chaîne d'émission, tout se passe comme si la modulation était QPSK.

La modulation PSK de base peut être transformée en modulation DPSK par un processus d'encodage différentiel par simple programmation. Les données binaires groupées en symboles de deux bits sont codées différentiellement suivant la normes IEEE 802.11 et DVB.

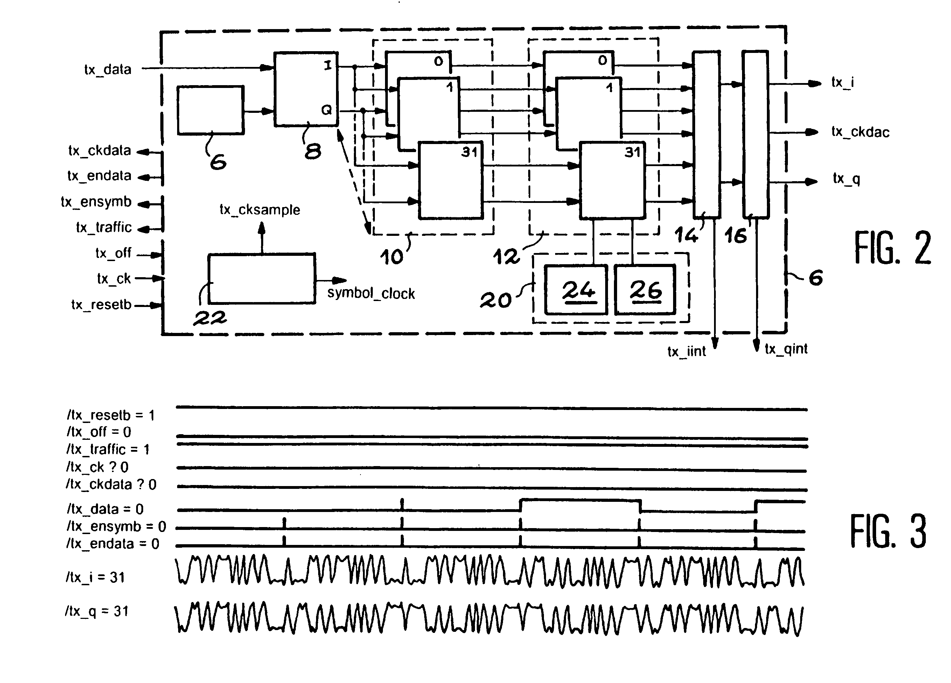

La figure 2 représente un schéma détaillé de l'émetteur 2.

Les entrées et sorties relatives à l'émetteur sont :

- Avec l'extérieur,

  - tx_ck : horloge de base de l'émetteur 2 ;
  - tx_resetb : commande l'initialisation ;
  - tx_off : commande d'interruption de la transmission ;
  - tx_trafic : commande du mode trafic ou acquisition ;
  - tx_data : entrée des données binaires ;
  - tx_ensymb : commande la validation des symboles ;
  - tx_endata : commande la validation des données ;
  - tx_ckdac : horloge échantillon pour les convertisseurs analogiques-numériques ;
  - tx_i : sortie de l'émetteur voie I ,
  - tx_q : sortie de l'émetteur voie Q.

- Avec l'étage d'entrée du récepteur,

  - tx_iint : rebouclage interne de la sortie de l'émetteur voie I ;
  - tx_qint : rebouclage interne de la sortie de l'émetteur voie Q.

L'émetteur 2 est rendu opérationnel par la programmation des codes d'étalement (TX codes), du masque de sélection des codes, (TX code mask), et de la consigne d'ajustement de l'horloge symbole, (TX clock shift).

L'émetteur 2 ainsi programmé est prêt à traiter trois sources de données binaires correspondant à trois modes de fonctionnements différents:

- un mode dit EXTERNE dans lequel un flot de série de bits en provenance de l'extérieur entre par le port tx_data. Les données sont présentées au circuit à travers un tampon ayant un débit compatible avec le débit binaire de l'émetteur 2. Ce dernier sollicite le tampon à l'aide du signal de validation tx_endata et du signal d'horloge d'échantillonnage des données tx_ckdata. Le signal tx_ensymb marque les données qui vont être étalées par le code 0,
- un mode dit INTERNE dans lequel un motif pseudo-aléatoire $2^{9-1}$ généré en interne à partir d'un registre à décalage, à des fins diverses, autotest du composant par exemple,
- un mode dit d'ACQUISITION dans lequel un motif composé de zéros, conduit à des symboles modulants toujours égaux à (0,0) donc à l'émission de codes non modulés. Dans ce cas, le codeur différentiel est forcé à "0".

En fonctionnement, l'émetteur 2 reçoit un signal d'horloge tx_ck, qui peut avoir une fréquence multiple de la fréquence échantillon.

Le signal tx_resetb active le fonctionnement de l'ensemble de l'émetteur 2. Lorsque tx_resetb = 0, aucun signal d'horloge n'est distribué, l'émetteur n'est pas opérationnel. Lorsque tx_resetb passe à "1", l'émetteur 2 devient opérationnel et il est initialisé.

Le signal d'horloge échantillon tx_cksample est généré en interne au circuit par le module 22. Ce signal est émis à l'extérieur du circuit par la borne tx_ckdac, pour un pilotage éventuel des convertisseurs numériques-analogiques situés en amont de la partie RF de l'émetteur 2.

Le module 22 génère également une horloge symbole symbol_clock à partir des mots de programmation définissant la longueur du symbole.

Cette horloge symbole peut être ajustée grâce à une programmation spécifique.

Cette commande d'ajustement a pour but de synchroniser les codes au niveau du récepteur 4. La précision du recalage de l'horloge est de $1/16^{ème}$ d'impulsion.

Le circuit doit rester opérationnel pendant la phase de chargement de la consigne : tx_resetb = 1.

Quel que soit le mode de fonctionnement : TRAFIC ou ACQUISITION, l'ajustement ne provoque pas la perte d'un symbole : soit le symbole est rallongé (consigne négative), soit il est raccourci (consigne positive).

Un registre de 32 bits contient le masque : mask_tx(31 :0). Si le bit mask_tx(i) = 1 alors le code i est valide, sinon le code i n'est pas utilisé.

Le masque est utilisé :

- pour générer le signal de validation tx_endata, qui va solliciter le tampon des données binaires à émettre,
- pour valider les voies correspondantes en sortie d'étalement.

Lorsque l'on modifie le masque, la nouvelle consigne est prise en compte immédiatement au niveau de l'étalement. Par contre, on attend le prochain tx_ensymb pour modifier le signal de validation tx_endata.

Les trente deux codes disponibles au niveau de l'émetteur 2 sont stockés dans une mémoire RAM. L'étalement est réalisé pour chaque code, le même code étant utilisé pour les voies I et Q. L'étalement, pour un code donné, consiste à multiplier les informations I et Q en sortie de codage différentiel par les différents coefficients du code de manière à passer d'un signal de fréquence symbole à un signal de fréquence impulsion (ou "chip" en anglais).

Le signal étalé, pour un code donné, prend comme valeur +1 ou -1 pendant un seul échantillon pour chaque impulsion et la valeur nulle pour les autres échantillons. En fonction du masque, les informations étalées sont ensuite sommées, puis passées au filtre impulsionnel 16.

De façon à limiter le spectre du signal émis et à limiter l'interférence entre les impulsions, un filtre d'émission passe-bas qui donne une forme particulière à l'impulsion est utilisé.

Cette impulsion peut être :

- une impulsion rectangulaire, dans ce cas le filtre est de longueur spc (pour "sample per chip" en anglais) nombre d'échantillons par impulsion, tous les coefficients sont égaux à 1.
- une impulsion correspondant à une fonction de transfert en racine de cosinus surélevé (SRRC) avec un coefficient d'amortissement égal à 0.4.

Comme cela a été dit précédemment, l'émetteur 2 permet de gérer les deux phases essentielles d'une transmission CDMA synchrone, la phase d'acquisition et la phase trafic. La sélection d'une de ces deux phases est faite grâce à la commande externe tx_trafic.

En mode ACQUISITION (tx_trafic = O) :

- un seul code est alloué à l'émetteur 2, ceci grâce au masque (a priori le code 0),
- des symboles nuls sont générés en interne au niveau de la gestion des données entrantes, le mode ACQUISITION est utilisé. L'émetteur 2 réalise l'étalement et le filtrage d'impulsion.

En mode TRAFIC (rtx_trafic = 1) :

- il est alloué à l'émetteur 2 un certain nombre de codes, ceci grâce au masque,
- l'émetteur 2 gère la prise en compte des données binaires (les données entrantes sont acquises suivant le mode EXTERNE), réalise la modulation, l'étalement sur les différents codes, somme les informations étalées et applique le filtre d'impulsion.

La transmission peut être interrompue par une commande externe tx_off.
Quand tx_off = 1, l'émetteur 2 arrête la transmission et quand tx_off = O, l'émetteur 2 reprend la transmission.
En phase de trafic, le débit d'une source peut être adapté en modifiant le nombre de codes qui lui sont affectés.
Deux procédures peuvent être envisagées pour modifier le masque:

- avec interruption de la transmission : le nouveau masque étant chargé pendant cette interruption,
- sans interruption de la transmission : le nouveau masque est chargé en cours de transmission.

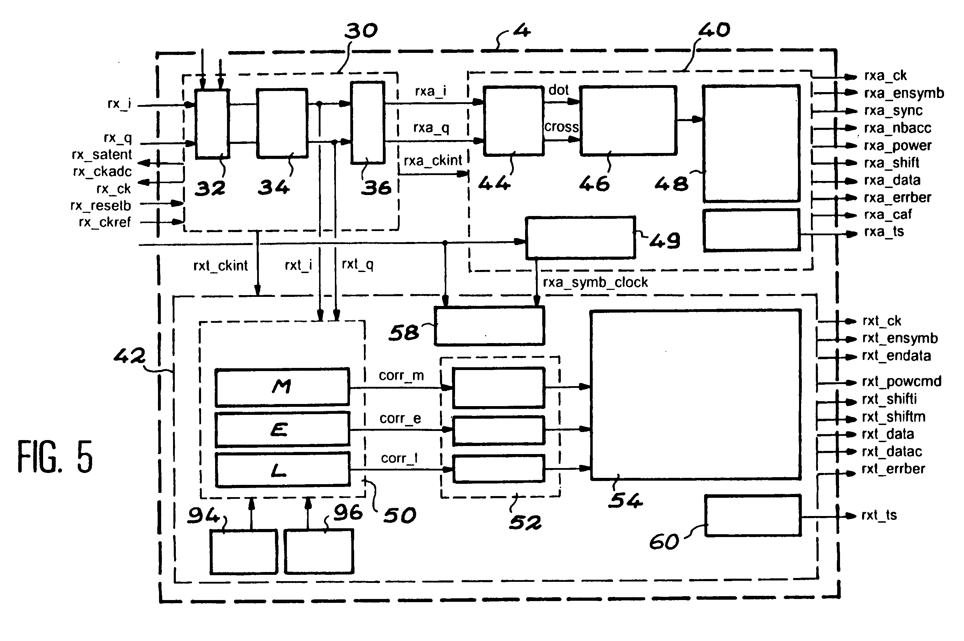

La figure 5 représente un schéma du récepteur 4 comportant l'étage d'entrée 30, l'étage de gestion d'acquisition 40 et l'étage de gestion de trafic 42.
Comme cela a été dit précédemment, l'étage d'entrée 30 réalise la mise en forme des signaux bande de base et les transmet à l'étage d'acquisition 40 et à l'étage de trafic 42.
Les fonctions de base de l'étage d'entrée 30 sont :

- la gestion des horloges ;
- la génération des horloges pour l'étage de gestion d'acquisition 40 et l'étage gestion de trafic 42 ;
- la mise en forme des signaux bande de base ;
- le filtrage des impulsions ;
- l'échantillonnage des signaux filtrés et le transfert aux étages de gestion d'acquisition 40 et de trafic 42, des signaux traités et des signaux d'horloge.

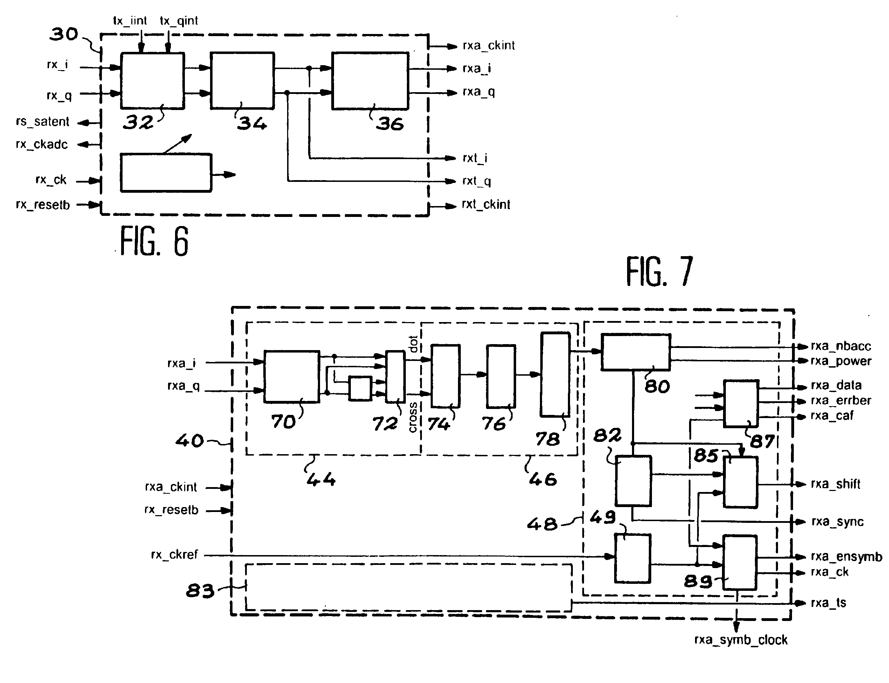

La figure 6 illustre l'architecture interne de l'étage d'entrée 30.
Les entrées et sorties relatives à cet étage sont :

- Avec l'extérieur

  - rx_ck : horloge de base du récepteur 4,
  - rx_resetb : remise à zéro pour l'initialisation,
  - rx_i : entrée du récepteur 4 voie I,
  - rxq : entrée du récepteur 4 voie Q,
  - rx_ckadc : horloge échantillon pour les convertisseurs analogiques-numériques,
  - rx_satent : saturation dans la mise en forme des données entrantes.

- Avec l'émetteur 2

  - tx_iint : rebouclage interne de la sortie de l'émetteur 2 voie I,
  - txqint : rebouclage interne de la sortie de l'émetteur 2 voie Q.

- Avec l'étage d'acquisition 40,

  - rxa_ckint : horloge de base de l'étage d'acquisition 40,
  - rxa_i : information bande de base de la voie I,
  - rxa_q : information bande de base de la voie Q.

- Avec l'étage de gestion de trafic 42,

  - rxt_ckint : horloge de base de l'étage de gestion de trafic 42,

- rxt_i : information bande de base de la voie I,
- rx_tq : information bande de base de la voie Q.

En fonctionnement, le récepteur 4 reçoit l'horloge rx_ck, qui est une horloge à la fréquence échantillon. Le signal rx_resetb active le fonctionnement de l'ensemble du récepteur 4. Lorsque rx_resetb = 0, aucun signal d'horloge n'est distribué, le récepteur 4 n'est pas opérationnel. Lorsque rx_resetb passe à "1", le récepteur 4 devient opérationnel et il est initialisé.

L'horloge échantillon rx_ck est émise à l'extérieur du circuit 1 par la borne rx_ckadc, pour un pilotage éventuel des convertisseurs analogique/numérique situés en aval de la partie RF du récepteur 4.

Les informations bande de base I et Q, sont présentées en parallèle au récepteur 4, sur les ports rx_i et rx_q.

Un décalage est ajouté à la donnée entrante.

Un deuxième filtre d'impulsion 34 identique à celui de l'émetteur 2 est intégré dans le récepteur 4. L'impulsion "chip" peut être :

- une impulsion rectangulaire, dans ce cas le filtre est de longueur spc (nombre d'échantillons par impulsion), tous les coefficients sont égaux à 1.
- une impulsion correspondant à une fonction de transfert en racine de cosinus surélevé (SRRC) avec un coefficient d'amortissement égal à 0.4.

L'horloge échantillon rx_ck de l'étage d'entrée 30 est passée à l'étage de gestion de trafic 42 du récepteur 4 (rxt_ckint), et à l'étage d'acquisition 40 du récepteur 4 (rxa_ckint).

En sortie de l'étage d'entrée 30, deux flots de données distincts (rxa_i, rxa_q) et (rxt_i, rxt_q) sont transmis respectivement à l'étage de gestion d'acquisition 40 et à l'étage de gestion de trafic 42 ainsi que deux horloges rxa_ckint et rxt_ckint.

La figure 7 illustre de façon détaillée l'architecture interne de l'étage d'acquisition 40 du récepteur 4. Cet étage reçoit les informations bande de base pré-traitées à l'étage d'entrée 30 et les exploite afin d'en extraire des informations de puissance et de décalage d'horloge respectivement au moyen du module de calcul 48 et du premier module de gestion d'horloge 49.

Les fonctions de base de l'étage d'acquisition 40 sont :

- la démodulation différentielle
- la corrélation des informations bande de base par la séquence d'acquisition,
- la multiplication différentielle,
- la génération du signal d'acquisition (ou estimation du canal),
- la sélection du signal,
- le filtre passe-bas,
- le seuillage,
- le traitement du signal d'acquisition,
- la détection des pics de corrélation (nombre de sources),
- l'estimation de puissance,
- la gestion des horloges symbole,
- l'évaluation de la commande de décalage d'horloge,
- la détermination des données binaires reçues,
- la sortie des horloges et des données,
- visualisation des signaux internes.

Les entrées et sorties relatives à l'étage d'acquisition 40 sont :

- Avec l'extérieur :

  - rx_resetb : remise à zéro pour l'initialisation,
  - rx_ckref : horloge symbole de référence,
  - rxa_ck : horloge voie acquisition,
  - rxa_ensymb : enable symbole.
  - rxa_data : donnée binaire,
  - rxa_power : puissance,
  - rxa_nbacc : nombre de pics détectés.
  - rxa_shift : information de décalage de l'horloge symbole,

- rxa_sync : indication de synchronisation par rapport à l'horloge symbole locale,
- rxa_caf : information de contrôle automatique de fréquence,
- rxa_errber : indication d'erreur du générateur de données,
- rxa_ts : port de sortie pour l'observabilité des signaux.

• Avec l'étage d'entrée 30 du récepteur 4 :

- rxa_ckint : horloge de base de l'étage d'acquisition 40,
- rxa_i : entrée de l'étage d'acquisition voie I,
- rxa_q : entrée de l'étage d'acquisition voie Q.

• Avec l'étage trafic du récepteur 4,

- rxa_symb_clock: horloge symbole locale pour liaison asynchrone.

Lorsque l'étage d'acquisition 40 est rendu opérationnel par programmation d'une séquence d'acquisition (RX acquisition code), un filtre adapté 70 intégré au module de démodulation différentielle 44 réalise la corrélation entre les informations bande de base après mise en forme, rxa_i et rxa_q, et la séquence d'acquisition. La longueur maximale de la séquence de corrélation est de 128 impulsions. Le filtre adapté est formé de 256 registres à décalage, permettant de stocker en permanence tous les échantillons d'un symbole. Ces registres sont regroupés par deux. En sortie de ces couples de registres, un coefficient de la séquence est appliqué pour réaliser une multiplication par 0, +1 ou -1.

Un bloc de multiplication différentielle 72 intégré au module de démodulation 44 calcule les signaux dot et cross à partir des sorties des filtres adaptés, dot étant la partie réelle du résultat de la multiplication complexe entre la sortie du filtre adapté et de cette même sortie retardée de la durée d'un symbole, cross étant la partie imaginaire.

Les équations suivantes illustrent le calcul effectué, $I(n)$ et $Q(n)$ correspondent aux sorties du filtre adapté, $I(n-1)$ et $Q(n-1)$ aux sorties retardées :

- $dot = I(n)I(n-1) + Q(n)Q(n-1)$
- $cross = I(n-1)Q(n) - I(n)Q(n-1)$

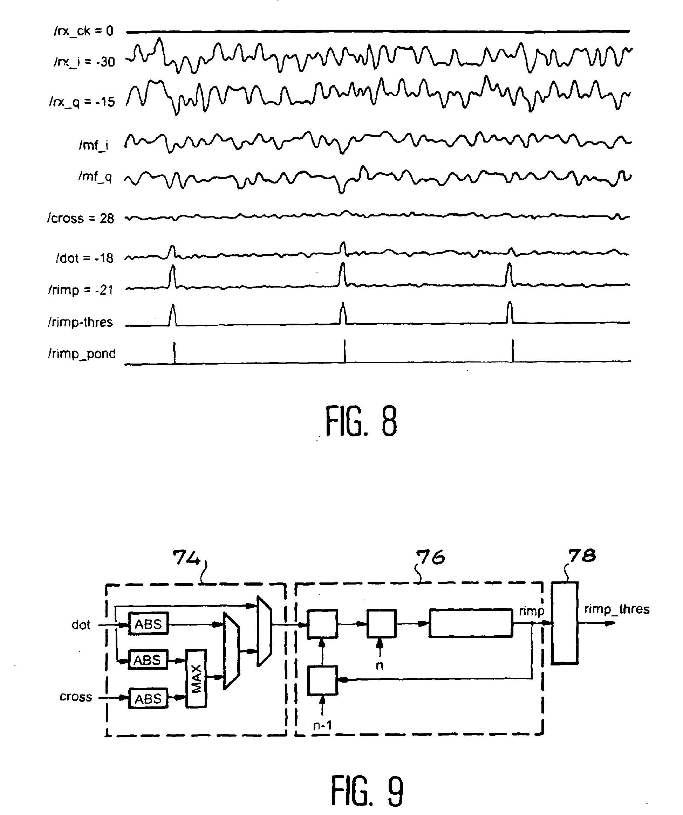

La figure 8 illustre les signaux traités dans l'étage d'acquisition 40, notamment les sorties de corrélation mf_i et mf_q et les résultats de la démodulation différentielle : dot et cross.

La figure 9 illustre l'architecture interne du bloc de sélection 74, du bloc de filtrage 76. Le signal d'acquisition correspond à l'estimée de la réponse impulsionnelle du canal de transmission (voir demande de brevet N°96.15569 déposée par la demanderesse: "Procédé de transmission d'informations par réponse impulsionnelle et récepteur correspondant".

La programmation permet de choisir comme signal utile à l'acquisition l'un des signaux suivants :

- dot : code non modulé, ce qui correspond pour l'émetteur 2 au mode de fonctionnement ACQUISITION avec génération en interne de symboles nuls, les pics de corrélation sont sur le signal dot et sont positifs,
- abs(dot) : code modulé en DBPSK, permettant de transmettre des données sur le code d'acquisition à un meilleur rapport signal à bruit que dans le cas DQPSK,
- MAX (abs(dot), abs(cross)) : code modulé en DQPSK, cas classique utilisé lorsque le code est modulé.

Quel que soit le signal choisi, sa valeur au niveau d'un pic est représentative de la puissance reçue pour l'accès correspondant mais est entachée de bruit.

Le signal sélectionné précédemment est fortement affecté de bruit d'accès multiple lorsque la charge est élevée. Le filtre passe-bas 76 permet de réaliser un filtrage de ce signal de façon à augmenter la probabilité de détection des pics d'accès et d'améliorer l'estimation de la puissance reçue pour cet accès.

Un filtre récursif passe-bas de profondeur programmable (jusqu'à $n = 512$ symboles, valeur définie par programmation) est utilisé pour diminuer le bruit. La sortie du filtre 76 donne une estimation de la réponse impulsionnelle non seuillée du canal de transmission, ce signal est nommé rimp.

Le signal rimp issu du filtre passe-bas 76 est ensuite seuillé dans le bloc 78 grâce à un mot de programmation. Le signal seuillé rimp_thres est donc défini par :

- si rimp >= seuil d'acquisition alors rimp_thres = rimp
- sinon rimp_thres = 0.

Le signal rimp_thres est analysé, sur chaque fenêtre symbole, afin de déterminer :

- le nombre de pics présents,
- la position et l'amplitude du pic principal.

Préalablement, le signal rimp_thres est traité de manière à ne conserver que les valeurs maximales des pics représentés par un nouveau signal rimp_pond. Grâce à ce nouveau signal rimp_pond, le nombre de pics dépassant le seuil d'acquisition peut être facilement compté, ce qui définit, le nombre d'émetteurs en phase d'acquisition ou le nombre d'accès. Cette information codée sur deux bits est émise du circuit 1, sous une forme série, par le port rxa_nbacc à chaque symbole (LSB puis MSB).

Le tableau suivant illustre le codage du nombre d'accès.

| information codée | nombre d'accès détectés |
|---|---|
| 00 | 0 |
| 01 | 1 |
| 10 | 2 |
| 11 | plus de deux |

Un mécanisme de recherche du maximum sur le signal rimp_thres, permet de définir la position du pic principal dans la fenêtre symbole : mean_peak_position. Cette information est ensuite transmise au premier module de gestion d'horloge 49 pour en permettre le recalage.

L'amplitude du pic principal (rimp max), dans la fenêtre symbole, est stockée en interne, et émise du circuit 1 à chaque symbole, sous une forme série, par le port rxa_power.

Un compteur intégré au premier module de gestion d'horloge 49, est incrémenté à chaque échantillon et constitue la base de génération de l'horloge symbole locale 82 (figure 7). Notons N, le nombre d'impulsion par symbole et spc le nombre d'échantillons par impulsion, en phase stable c'est-à-dire lorsque le pic principal apparaît toujours à la même position dans la fenêtre symbole, le comptage s'effectue de "0" à "N*spc -1", et le front de l'horloge locale est généré quand le compteur passe par la valeur "(N*spc-1)/2".

Pendant la phase dynamique correspondant à l'apparition, la disparition et le glissement du pic principal, le compteur peut être chargé avec une valeur initiale différente de "0", ce qui permet le recalage de l'horloge symbole locale.

Le mécanisme de recherche du maximum sur le signal rimp_thres, pendant une fenêtre symbole, permet de définir la position du pic principal dans la fenêtre symbole mean_peak_position délivrée à la sortie d'un bloc de détection de pic 80 (figure 7) intégré au module d'acquisition 48. La position correspond à la valeur de décalage de l'horloge en nombre d'échantillons. A partir de cette information, calculée à chaque symbole, deux méthodes peuvent être utilisées pour recaler le compteur d'horloge symbole locale 82 (figure 9), c'est-à-dire définir la valeur initiale :

- accrochage rapide : la valeur initiale est égale à la valeur de décalage, l'horloge est alors recalée en 1 symbole,
- accrochage lent: la valeur initiale est égale au signe de la valeur de décalage: +1 ou -1 ou O , la valeur de décalage définissant le nombre de symboles nécessaires pour effectuer le recalage de l'horloge.

Une indication de synchronisation de l'horloge symbole locale 82 est émise du circuit 1 par le port rxa_sync. Lorsque rxa-sync = 1, l'horloge symbole locale est calée, le pic principal apparaît toujours à la même position dans la fenêtre symbole. Lorsque rxa_sync = O, le recalage de l'horloge symbole locale 82 est actif.

Le bloc d'horloge symbole local 82 (figure 7) reçoit une horloge symbole de référence rx_ckref. Les fronts montants de cette horloge doivent être espacés exactement d'une période symbole. Ce signal est traité en interne au circuit comme une donnée, le front montant est détecté afin d'initialiser un compteur servant de base à la gestion interne de l'horloge symbole de référence reference_symbol_clock, pour l'étage d'acquisition 40. Cette horloge interne est utilisée pour calculer la consigne de décalage 85 d'horloge et éventuellement pour synchroniser les informations sortant de l'étage d'acquisition 40.

Deux possibilités sont envisageables pour calculer la consigne de décalage de l'horloge symbole :

- soit à partir de la position du pic principal dans la fenêtre symbole (main_peak_postion), dans ce cas, quel que soit le mode d'accrochage de l'horloge symbole locale, l'information de décalage d'horloge est correcte et produite immédiatement,
- soit à partir de l'horloge symbole locale (local_symbol_clock) 82, dans le cas du mode rapide d'accrochage de l'horloge symbole locale, l'information de décalage d'horloge est correcte et il apparaît un symbole après l'apparition du nouveau pic et dans le cas du mode lent, pendant les X symboles de recalage de l'horloge locale, l'information de décalage d'horloge est incorrecte.

L'information de décalage d'horloge produite est directement compatible avec l'émetteur 2, le bit de poids faible définissant le 1/16ème d'impulsion. Le calcul de cette information de décalage fait dans l'étage d'acquisition 40 ou 48 est précis au 1/8ème d'impulsion : le bit de poids faible de la consigne est toujours nul ceci évidemment quand on traite huit échantillons par impulsion. L'information de décalage est émise du circuit 1, sous une forme série, par le port rxa_shift.

La détermination des données binaires est faite grâce à l'horloge symbole locale 82 (local_symbol_clock), qui définit l'instant de capture des informations dot et cross.

En modulation DBPSK, les pics de corrélation apparaissent uniquement sur le signal dot, le signe du pic correspond à l'information binaire. En modulation DQPSK, les pics sont présents alternativement sur le signal dot et le signal cross, le signe du pic et le signal sur lequel ils se trouvent, permettent de décoder les deux bits d'information. Le tableau suivant illustre le décodage des données :

| valeur absolue max | Signe du pic | symbole décodé (I,Q) | saut de phase |
|---|---|---|---|
| dot | + | 00 | 0 |
| cross | - | 10 | -90° |
| dot | - | 11 | 180° |
| cross | + | 01 | +90° |

Ces deux bits d'information sont émis du circuit 1, sous une forme série, par le port rxa_data, le premier correspondant au bit I et le second au bit Q.

L'étage d'acquisition 40 intègre un mécanisme d'autotest, basé sur un générateur de données aléatoires $2^9$-1 identique à celui de l'émetteur 2. Il permet de vérifier que les données générées par l'émetteur 2 sont correctement décodées au niveau de l'étage d'acquisition 40. On a alors rxa_errber = 0.

A cet effet, l'émetteur 2 doit être en mode TRAFIC et utiliser uniquement le code d'acquisition. Le rebouclage de l'émetteur 2 sur le récepteur 4 peut être réalisé en externe au niveau du circuit 1 ou en interne.

A partir des valeurs de dot et cross, à la position du pic de plus forte amplitude définie par l'horloge locale 82, on génère une commande de commande automatique de fréquence CAF. Cette information caractérise le décalage en fréquence de l'horloge du récepteur 4 par rapport à celle de l'émetteur 2, le bit de CAF, calculé à chaque symbole, émis par le port rxa_caf, donne le sens de ce décalage.

Un décalage en fréquence induit l'apparition d'un pic parasite sur la voie ne contenant pas le pic de corrélation (voie cross en DBPSK, voie dot ou cross en DQPSK).

En DBPSK, le module 48 de l'étage 40 calcule le bit de CAF par la fonction XOR(signe(dot), signe(cross)) à la position du pic principal.

En DQPSK, si le pic de corrélation est présent sur la voie dot, le bit de CAF = XOR(signe(dot), signe(cross)), sinon (pic sur cross) le bit de CAF = NOT(XOR(signe(dot), signe(cross))).

L'horloge interne rxa_ckint est émise du circuit 1 par le port rxa_ck.

L'horloge symbole de référence (reference_symbol_clock) est émise à l'extérieur, sous la forme d'un signal de validation rxa_ensymb, de durée une période de l'horloge interne de l'étage d'acquisition (rxa_ckint). Ce signal de validation permet de marquer le bit de poids faible de toutes les informations sorties en série rxa_power rxa_shift rxa_nbacc, rxa_data.

L'horloge symbole locale 82 (local_symbol_clock) est également transmise de l'étage d'acquisition 40 à l'étage de gestion de trafic 42. (rxa_symb_clock), pour permettre l'utilisation du circuit dans le cadre d'une liaison asynchrone. Dans le cas d'une liaison asynchrone, l'horloge symbole locale de l'étage d'acquisition 40 pilote directement l'étage de gestion de trafic 42. La définition du type de liaison synchrone ou asynchrone, est faite par programmation.

Des signaux internes (mf_i, mf_q, dot, cross, rimp, rimp_pond) peuvent être émis le port rxa_ts afin d'être visualisés sur un oscilloscope.

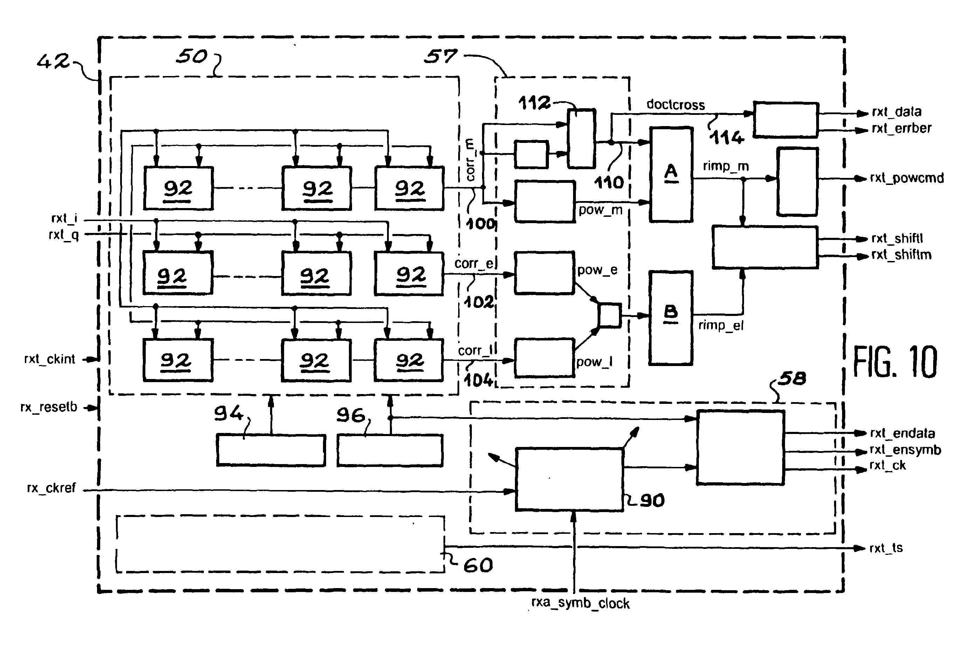

La figure 10 illustre l'architecture interne de l'étage de gestion de trafic 42.

Les fonctions de base de cet étage sont :

- la gestion des horloges,
- la corrélation des informations bande de base par les séquences de trafic,
- le post-traitement des sorties de corrélation,

- la multiplication différentielle,
- la détermination des données binaires reçues,
- l'estimation de puissance,
- l'évaluation de la commande de décalage d'horloge,
- la sortie des horloges et des données,
- la visualisation des signaux internes.

Les entrées et sorties relatives à l'étage de gestion de trafic 42 sont :

- Avec l'extérieur :

  - rx_resetb : remise à zéro pour l'initialisation,
  - rx_ckref : horloge symbole de référence,
  - rxt_ck : horloge voie trafic,
  - rxt_ensymb : validation de symbole,
  - rxt_endata : validation de donnée,
  - rxt_data : donnée binaire
  - rxt_powcmd : commande de puissance,
  - rxt_shiftm : information de décalage de l'horloge symbole (poids forts),
  - rxt_shiftl : information de décalage de l'horloge symbole (poids faibles) ,
  - rxt_errber : indication d'erreur du générateur de données,
  - rxt_ts : port de sortie pour l'observabilité des signaux.

- Avec l'étage d'entrée 30 :

  - rxt_ckint : horloge de base de l'étage de gestion trafic 42,
  - rxt_i : entrée de l'étage de trafic, voie I,
  - rxt_q : entrée de l'étage de trafic, voie Q.

- Avec l'étage d'acquisition 40 :

  - rxa_symb_clock : horloge symbole locale pour liaison asynchrone.

Pour rendre opérationnel l'étage de gestion de trafic 42, il est nécessaire de programmer des séquences de trafic (RX trafic codes), et le masque de sélection des codes (RX code mask).
En fonctionnement, l'étage de gestion de trafic 42 reçoit une horloge symbole de référence rx_ckref. Cette horloge est utilisée dans les étages de gestion d'acquisition 40 et de gestion de trafic 42 du récepteur 4.
Les fronts montants de cette horloge doivent être espacés exactement d'une période symbole.
Ce signal est traité en interne au circuit comme une donnée, le front montant est détecté afin d'initialiser un compteur servant de base à la gestion interne d'une deuxième horloge symbole de référence 90 (reference_symbol_ clock) intégrée au deuxième module de gestion d'horloge 58.
Cette horloge interne 90 est utilisée pour piloter l'ensemble des traitements de l'étage de gestion de trafic 42 et notamment les corrélateurs 92.
Si le circuit est utilisé dans le cadre d'une liaison asynchrone, l'étage de gestion de trafic 42 est directement piloté par l'horloge symbole locale de l'étage d'acquisition 40 rxa_symb_clock, c'est-à-dire que local_symbol_clock = rxa_symbol_clock.
Dans le mode de réalisation illustré par la figure 10, un banc de trente deux corrélateurs glissants 92 réalise les corrélations entre les informations bande de base après mise en forme rxt_i et rxt_q et les séquences de trafic fournies par une table de codes 94 et un module de masquage 96. La longueur maximale des séquences de corrélation est de 128 impulsions.
Les corrélateurs 92 sont pilotés grâce à la deuxième horloge symbole locale 90 (local_symbol_clock). Ils sont calés sur la valeur maximale du pic de corrélation et sont utilisés pour la détermination des données binaires et l'extraction de puissance.
Le circuit traite deux, quatre ou huit échantillons par impulsion. Dans tout l'étage de gestion de trafic 42, un seul échantillon par impulsion est pris en compte, c'est pourquoi les informations I et Q sont sérialisées de manière à réduire le matériel nécessaire au traitement.
Cette sérialisation est faite grâce à un signal i_qbar, qui oscille à une fréquence deux fois plus faible que la fréquence échantillon. Quand i_qbar =1, l'information est liée à la voie I, sinon elle correspond à la voie Q.

A partir de la deuxième horloge symbole locale 90, un signal de validation de durée deux périodes d'horloge échantillon est généré : en_symb_middle. Ce signal marque, le premier échantillon (une information I et une information Q) du symbole, et est utilisé pour :

- initialiser l'accumulateur à chaque début de symbole,
- piloter le module de lecture 94 des coefficients des codes stockés en mémoire RAM, et
- gérer la mise en série des sorties des trente deux corrélateurs 92.

Un autre signal en_chip_middle, identifie l'échantillon de l'impulsion qui est pris en compte dans la voie MIDDLE.

Les corrélateurs sont cascadés de manière à produire un flot série cor_m 100 à partir des valeurs de corrélation. Ce flot série cor_m est appliqué à l'entrée du deuxième étage de démodulation différentielle 52, les soixante quatre valeurs sérialisées à partir du début du symbole ont la forme : 0I, puis 0Q, puis 1I, puis, 1Q, puis 2I, puis 2Q pour finir par 31Q.

Deux autres bancs de trente deux corrélateurs glissants, du même type que ceux de la voie M, réalisent des traitements analogues, mais sont légèrement déphasés.

Le déphasage entre les voies E et L par rapport à la voie M peut prendre 2 valeurs :

1/4 impulsion ou 1/2 impulsion (la voie E est en avance et la voie L en retard).

A partir de l'horloge symbole locale 90, et en fonction de la programmation, deux signaux de validation de durée deux périodes d'horloge échantillon sont générés : en_early et en_late. Ces signaux marquent les premiers échantillons du symbole qui vont être traités par la voie E et la voie L.

Deux autres signaux en_chip_early et en_chip_late, identifient les échantillons de l'impulsion qui sont pris en compte, respectivement dans la voie E et dans la voie L. Deux flots série respectivement cor_e 102 et cor_l 104 sont produits en sortie des deux voies E et L et sont appliqués à l'entrée du deuxième étage de démodulation différentielle 52.

Le masque d'allocation des codes 96 permet de sélectionner les codes que l'on souhaite utiliser au niveau de l'étage de gestion de trafic 42, le débit binaire est directement lié au nombre de codes validés dans le masque 96.

Un registre de trente deux bits contient le masque mask_rx(31 : 0). Si le bit mask_rx(i) = 1 alors le code i est valide, sinon le code i n'est pas utilisé.

Le masque est utilisé :

- pour générer le signal de validation rxt_endata, qui marquent les codes utilisés,
- pour piloter les corrélateurs correspondants.

Lorsque l'on modifie le masque, la nouvelle consigne est prise en compte immédiatement au niveau des corrélateurs. Par contre, on attend le prochain rxt_ensymb pour modifier le signal de validation rxt_endata.

En phase de trafic, le débit d'une source peut être adaptée en modifiant le nombre de codes qui lui sont affectés.

A partir des sorties de corrélation voie M (cor m), on effectue la démodulation différentielle, c'est-à-dire le calcul des informations dot et cross, dot étant la partie réelle du résultat de la multiplication complexe 112 entre la sortie de corrélation et cette même sortie retardée de la durée d'un symbole, cross la partie imaginaire.

Les équations suivantes illustrent le calcul effectué, I(n) et Q(n) correspondent aux sorties de corrélation, I(n-1) et Q(n-1) aux sorties retardées :

- $dot = I(n)I(n-1) + Q(n)Q(n-1)$
- $cross = I(n-1)Q(n) - I(n)Q(n-1)$

Ces informations dot et cross, pour chacun des trente deux codes, sont calculées en série et définissent le signal dotcross 114.

La détermination des données binaires est faite à partir du signal dotcross 114.

En modulation DBPSK, les pics de corrélation apparaissent uniquement sur l'information dot, le signe du pic correspond à l'information binaire. En modulation DQPSK, les pics sont présents alternativement sur l'information dot et l'information cross, le signe du pic et la voie sur laquelle il se trouve, permettent de décoder les deux bits d'information

Le choix du type de modulation est fait par programmation. La table de décodage des données est illustrée par le tableau suivant :

| Max valeur absolue | signe du pic | symbole décodé<I,Q) | Saut de Phase lump |
|---|---|---|---|
| dot | + | 00 | 0° |

(suite)

| Max valeur absolue | signe du pic | symbole décodé<I,Q) | Saut de Phase lump |
|---|---|---|---|
| cross | - | 10 | -90° |
| dot | - | 11 | 180° |
| cross | + | 01 | +90° |

Le traitement des trente deux codes est fait en série. Les soixante quatre bits d'information calculés sont émis du circuit 1, sous une forme série, par le port rxt_data, la première paire correspondant aux bits d'information relatifs au code 0, le premier étant le bit I et le second le bit Q. la seconde paire au code 1, etc.

L'étage de gestion de trafic 42 intègre un mécanisme d'autotest, basé sur un générateur de données aléatoires $2^9$-1 identique à celui de l'émetteur 2. Il permet de vérifier que les données générées par l'émetteur 2 sont correctement décodées au niveau l'étage de gestion de trafic 42 : on a alors rxt_errber = 0.

A cet effet, l'émetteur 2 doit être en mode trafic et synchronisé par rapport à l'horloge symbole de référence et l'étage de gestion de trafic 42 doit avoir le même masque de codes. Le rebouclage de l'émetteur 2 sur le récepteur 4 peut être réalisé en externe au niveau du circuit ou en interne.

L'énergie du signal I2 + Q2 est calculée à partir des sorties de corrélation 92, pour les trois voies M, E et L (cor_m, cor_e, cor_l).

Cette information, pour chacun des trente deux codes, est calculée en série et définit le signal pow_m pour la voie M, pow_e pour la voie E et pow_l pour la voie L. L'information est stable pendant deux périodes échantillon.

Un filtre passe-bas sur la voie M permet d'améliorer l'estimation de la puissance en diminuant le bruit.

La programmation permet de choisir comme signal utile pour l'estimation de puissance l'un des signaux suivants :

- pow_m : énergie sur la voie M,
- abs(dot) : résultat de la démodulation différentielle en DBPSK,
- MAX (abs(dot), abs(cross)) : résultat de la démodulation différentielle en DQPSK.

Les informations dot et cross apparaissent en série sur le signal dotcross.

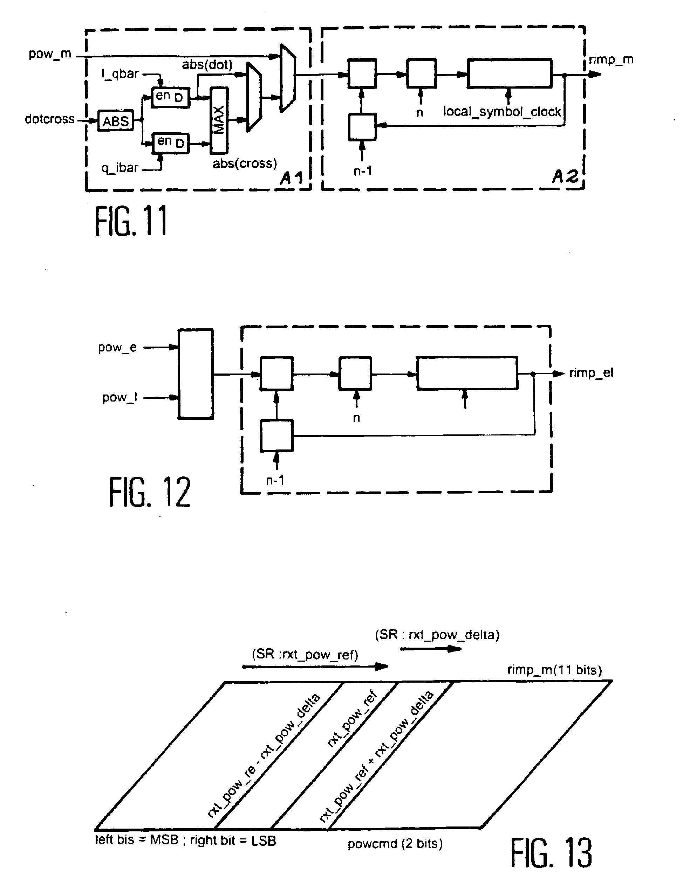

La figure 11 représente la structure interne de l'architecture du bloc de sélection A1 et du bloc de filtrage A2 du signal de puissance équipant la voie M. Le bloc de filtrage A1 est un filtre du type récursif et de profondeur programmable jusqu'à n = 512 symboles. En sortie du filtre, le signal rimp_m contient les trente deux informations relatives aux trente deux codes, chaque information étant stable pendant deux périodes échantillon.

La figure 12 représente la structure interne du bloc de filtrage B du signal de puissance équipant les voies E et L. Ce filtre prend en compte la différence entre les énergies des voies E et L et permet de calculer une estimation de l'écart de puissance entre ces deux voies. Cette information est utile pour le calcul du décalage d'horloge.

Le bloc de filtrage B est un filtre passe-bas identique au filtre présent sur la voie M. Les données traitées par ce filtre sont également signées, mais le bit de signe n'est pas forcément nul. Ces données peuvent être positives ou négatives.

La profondeur du filtre est identique à la profondeur du filtre de la voie M. En sortie du filtre, le signal rimp_el contient les trente deux informations relatives aux trente deux codes, chaque information étant stable pendant deux périodes échantillon. Ces informations sont signées.

L'information rimp_m, issue du filtre passe-bas A2 sur la voie M, correspond à une estimation de la puissance pour les trente deux codes.

A partir de celle-ci, une commande de puissance (powcmd), codée sur deux bits est calculée.

La figure 13 illustre le codage de la commande de puissance.

Le mot de programmation {SR : rxt_pow_ref} fixe la référence de puissance et le mot {SR : rxt_pow_delta} définit une plage autour de cette référence.

La commande powcmd est émise du circuit à chaque symbole et pour chaque code, sous une forme série, par le port rxt_powcmd (LSB puis MSB).

A partir de l'estimation de puissance (rimp_m) sur la voie M, et de l'estimation de l'écart de puissance (rimp_el) entre les voies E et L, une consigne de décalage de l'horloge symbole est calculée.

Cette information de décalage de l'horloge : shift(3:0) constitue un mot signé de 4 bits (valeur comprise dans l'intervalle [-7 ; +7]), le bit de poids faible définissant le 1/16ème d'impulsion.

Contrairement à l'étage d'acquisition 40, où le calcul réalisé donne une consigne précise au 1/8ème d'impulsion (le bit de poids faible est toujours nul), dans l'étage de gestion de trafic 42, la consigne est précise au 1/16ème d'impulsion.

Le principe de calcul de la consigne de décalage de l'horloge symbole repose sur la conversion d'un écart de puissance en un écart de temps. La fonction reliant ces deux grandeurs est quasiment linéaire autour de zéro et peut s'écrire :

$$\text{Shift} = \frac{\text{Gr}}{\text{Gc}} * \frac{\text{rimp\_el}}{\text{rimp\_m}}.$$

Gr correspond au gain de résolution qui permet de définir le LSB de la commande. La résolution de la commande de poursuite est fixée à 1/16$^{\text{ème}}$ d'impulsion, par conséquent, la valeur de Gr est 16.
Gc correspond au gain de conversion qui est la pente de la conversion du temps en écart de puissance et dépend de la forme du pic de corrélation, et par conséquent du filtre d'impulsion, et du décalage des voies E et L.
Le tableau suivant donne des valeurs approchées du paramètre Gc, ainsi que le codage du mot de programmation correspondant {SR:rxt_div_coef}.

| Filtre d'impulsion | E-L-Δ | Gc | {SR:rxt_div_coef}. |
|---|---|---|---|
| RECT | 1/4 chip | 3 | 0 |
| RECT | 1/2 chip | 2 | 1 |
| taux d'amortissement O,4 | 1/4 chip | 3 | 0 |
| taux d'amortissement 0,4 | 1/2 chip | 3 | 0 |

L'information de décalage est émise du circuit (shift), à chaque symbole et pour chaque code, sous une forme série et parallèle, par le port rxt_shiftl pour les deux bits de poids faibles (rxt_shift(0), puis rxt_shift(1)) et le port rxt_shiftm pour le deux bits de poids forts (rxt_shift(2), puis rxt_shift(3)).
L'horloge interne rxt_ckint est émise du circuit par le port rxt_ck.
L'horloge symbole locale est émise à l'extérieur, sous la forme d'un signal de validation rxt_ensymb, de durée deux périodes de l'horloge interne (rxt_ckint) de l'étage de gestion de trafic 42. Ce signal de validation rxt_ensymb permet de marquer les bits d'informations relatifs au code 0 : rxt_data, rxt_shiftl, rxt_shiftm, rxt_powcmd.
Le signal rxt_endata permet de marquer les informations relatives aux codes validés par le masque mask_rx.
Des signaux internes (dotcross, cor_m, cor_e, cor_l, pow_m, pow_e, pow_l, powj, rimp_m, rimp_el) peuvent être émis le port rxt_ts afin de les visualiser sur un oscilloscope.
Le circuit selon l'invention est programmable via une interface simple comprenant un bus adresse et un bus données et deux signaux de contrôle. Les mots de programmation sont regroupés par banc. Une adresse pg_ad sur trois bits permet de sélectionner un banc, les mots sont rentrés en octets par un bus spécifique pg. La table présentée ci-dessous donne une brève description des différents bancs de programmation.

| @ | pg_ad(2:O) | Description |
|---|---|---|
| 0 | "000" | Serial Register |
| 1 | "001" | RX code mask |
| 2 | "010" | TX code mask |
| 3 | "011" | RX Acquisition code |
| 4 | "100" | RX Trafic codes |
| 5 | "101" | TXcodes |
| 6 | "110" | TX dock shift |
| 7 | "111" | reset |

Les entrées relatives à l'aspect programmation sont :

- pg(7:O) : entrée des octets de programmation,

- pg_ck : horloge pour la prise en compte de l'information sur pg vers le registre à décalage, le front montant est le front actif du signal,
- pg_ld : commande de prise en compte de la nouvelle programmation (pas utilisée pour les séquences),
- pgad(2:O) : sélection du banc de programmation.

**Revendications**

1. Circuit numérique (1) d'émission/réception destiné à être monté sur au moins une source et sur au moins un concentrateur échangeant avec ladite source des symboles binaires, ledit circuit (1) comportant un émetteur (2) apte à transmettre lesdits symboles binaires et un récepteur (4) apte à recevoir des symboles émis par une source, circuit (1) **caractérisé en ce que** l'émetteur (2) comporte un premier module (20) destiné à générer au moins un code binaire pour effectuer l'étalement spectrale des symboles à émettre et un deuxième module (22) destiné à générer au moins un signal d'horloge interne pour synchroniser la réception des symboles émis par une source, et **en ce que** ledit récepteur comporte des moyens (46, 48) pour détecter de nouvelles sources d'émission et des moyens (49) pour générer des signaux de synchronisation et des signaux de commande de puissance correspondant à chaque nouvelle source détectée.

2. Circuit selon la revendication 1, **caractérisé en ce que** ledit récepteur comporte un étage d'entrée (30), un étage de gestion d'acquisition (40) et un étage de gestion de trafic (42), l'étage d'entrée (30) comportant un bloc (32) de mise en forme des signaux reçus, un filtre d'impulsion (34) destiné à limiter le spectre des signaux reçus, un étage d'échantillonnage (36) des signaux filtrés, et transmettant les données filtrées, d'une part, à l'étage de gestion d'acquisition (40) qui extrait desdites données filtrées les informations de puissance et de décalage temporel des symboles reçus par rapport à une horloge de base du récepteur (4), d'autre part, à l'étage de gestion de trafic (42) qui extrait des données filtrées les informations binaires transmises et les informations de puissance et de décalage temporel des symboles reçus par rapport à l'horloge de base du récepteur (4).

3. Circuit selon la revendication 2, **caractérisé en ce que** l'étage de gestion d'acquisition (40) comporte un premier module (44) de démodulation différentielle, un module (46) de génération d'un signal d'acquisition représentatif des signaux de synchronisation et des signaux de commande de puissance correspondant à chaque nouvelle source d'émission, un module (48) de traitement du signal d'acquisition généré et un premier bloc de gestion d'horloge (49).

4. Circuit selon la revendication 2, **caractérisé en ce que** l'étage de gestion de trafic (42) comporte un module (50) de corrélation des données préalablement traitées avec les codes associés à ces données, un module (52) de démodulation différentielle des données corrélées, un module (54) de calcul destiné à déterminer les signaux de synchronisation et les signaux de commande de puissance correspondant à chaque source d'émission détectée.

**Claims**

1. Transmission/reception digital circuit (1) intended to be mounted on at least one source and on at least one concentrator exchanging binary symbols with said source, said circuit (1) comprising a transmitter (2) able to transmit said binary symbols and a receiver (4) able to receive symbols sent by a source, circuit (1) being **characterized in that** the transmitter (2) comprises a first module (20) intended to generate at least one binary code in order to spread the spectrum of the symbols to be transmitted and a second module (22) intended to generate at least one internal clock signal in order to synchronize the reception of the symbols sent by a source, and **in that** said receiver comprises means (46, 48) for detecting new transmission sources and means (49) for generating synchronization signals and power control signals corresponding to each new source detected.

2. Circuit according to Claim 1, **characterized in that** said receiver comprises an input stage (30), an acquisition management stage (40) and a traffic management stage (42), the input stage (30) comprising a block (32) for formatting the received signals, a pulse filter (34) intended to limit the spectrum of the received signals, a sampling stage (36) for the filtered signals, and transmitting the filtered data, on the one hand, to the acquisition management stage (40) which extracts from said filtered data the power and time offset information for the received symbols relative to a basic clock of the receiver (4), and on the other hand, to the traffic management stage (42) which extracts from the filtered data the binary information transmitted and the power and time offset information for the received symbols relative to the basic clock of the receiver (4).

3. Circuit according to Claim 2, **characterized in that** the acquisition management stage (40) comprises a first differential demodulation module (44), a module (46) for generating an acquisition signal representative of the synchronization signals and of the power control signals corresponding to each new transmission source, a module (48) for processing the acquisition signal generated and a first clock management block (49).

4. Circuit according to Claim 2, **characterized in that** the traffic management stage (42) comprises a module (50) for correlating data previously processed with codes associated with these data, a differential demodulation module (52) for the correlated data, a calculation module (54) intended to determine the synchronization signals and the power control signals corresponding to each transmission source detected.

**Patentansprüche**

1. Digitale Sende-/Empfangsschaltung (1), die dafür bestimmt ist, auf wenigstens eine Quelle und auf wenigstens einen Hub bzw. Netzwerkverteiler montiert zu werden, der mit der genannten Quelle Binärzeichen austauscht, wobei die besagte Schaltung (1) einen Sender (2), der fähig ist, die besagten Binärzeichen zu übertragen, und einen Empfänger (4) umfasst, der fähig ist, die Zeichen, die von einer Quelle gesendet werden, zu empfangen, wobei die Schaltung (1) **dadurch gekennzeichnet ist, dass** der Sender (2) ein erstes Modul (20), das dafür bestimmt ist, wenigstens einen Binärcode zu erzeugen, um die spektrale Spreizung der zu sendenden Zeichen zu bewirken, und ein zweites Modul (22) umfasst, das dafür bestimmt ist, wenigstens ein internes Taktsignal zu erzeugen, um den Empfang der von einer Quelle gesendeten Zeichen zu synchronisieren, und dass der besagte Empfänger Mittel (46, 48), um neue Sendequellen ausfindlg zu machen, und Mittel (49) zum Erzeugen von Synchronisationssignalen und Leistungsbefehlssignalen, die jeder neuen ausfindig gemachten Quelle entsprechen, umfasst.

2. Schaltung nach Anspruch 1, **dadurch gekennzeichnet, dass** der Empfänger eine Eingangsstufe (30), eine Erfassungsmanagementstufe (40) und eine Verkehrsmanagementstufe (42) umfasst, wobei die Eingangsstufe (30) umfasst: eine Impulsformungseinheit (32) für die Empfangssignale, ein Impulsfilter (34), das dazu bestimmt ist, das Spektrum der Empfangssignale zu begrenzen, eine Stichprobenentnahmestufe (36) für die gefilterten Signale, die die gefilterten Daten einerseits an die Erfassungsmanagementstufe (40), welche aus den besagten gefilterten Daten die Leistungs- und die Zeitverschiebungsinformationen der empfangenen Zeichen in Bezug auf einen Basistakt des Empfängers (4) extrahiert, und andererseits an die Verkehrsmanagementstufe (42) überträgt, die aus den gefilterten Daten die übertragenen Binärinformationen und die Lelstungs- und Zeitverschiebungsinformationen der empfangenen Zeichen in Bezug auf den Basistakt des Empfängers (4) extrahiert.

3. Schaltung nach Anspruch 2, **dadurch gekennzeichnet, dass** die Erfassungsmanagementstufe (40) ein erstes differentielles Demodulationsmodul (44), ein Modul (46) zur Erzeugung eines Erfassungssignals, das für die Synchronisationssignale und die Leistungsbefehlssignale, die jeder neuen Sendequelle entsprechen, repräsentativ ist, ein Verarbeitungsmodul (48) für das erzeugte Erfassungssignal und eine erste Taktverwaltungseinheit (49) umfasst.

4. Schaltung nach Anspruch 2, **dadurch gekennzeichnet, dass** die Verkehrsverwaltungsstufe (42) ein Korrelationsmodul (50) für Daten, die vorab mit den Codes verarbeitet wurden, die mit diesen Daten verknüpft sind, ein differentielles Demodulationsmodul (52) für korrelierte Daten und ein Rechenmodul (54), das dafür bestimmt ist, die Synchronisationssignale und die Leistungsbefehisslgnale, die jeder erkannten Sendequelle entsprechen, zu bestimmen, umfasst.

FIG. 1

tx_data
tx_ckdata
tx_endata
tx_ensymb
tx_traffic
tx_off
tx_ck
tx_resetb

6  22  8  10  12  14  16

24  26  20

1  2

tx_iint  tx_qint

tx_i
tx_q
tx_ckdac

rx_i
rx_q
rx_satent
rx_ckadc
rx_ck
rx_resetb
rx_ckref

32  34  36  40

rxa_i
rxa_q
rxa_ckint

dot
cross

44  46  48

49

30

rxt_ckint  rxt_i  rxt_q

4

rxa_symb_clock

58

50

M  corr_m
E  corr_e
L  corr_l

52  54

42

94  96

60

pg_ck
pg_ld
pg_ad
pg

59

rxa_ck
rxa_ensymb
rxa_sync
rxa_nbacc
rxa_power
rxa_shift
rxa_data
rxa_errber
rxa_caf
rxa_ts

rxt_ck
rxt_ensymb
rxt_endata
rxt_powcmd
rxt_shifti
rxt_shiftm
rxt_data

rxt_errber

rxt_ts

EP 1 346 490 B1

EP 1 346 490 B1

tx_data

tx_ckdata
tx_endata
tx_ensymb
tx_traffic
tx_off
tx_ck
tx_resetb

6

8

I
Q

0
1
31

0
1
31

10
12
14
16
6

20
24 26

tx_cksample

symbol_clock

22

tx_iint
tx_qint

tx_i
tx_ckdac
tx_q

FIG. 2

/tx_resetb = 1
/tx_off = 0
/tx_traffic = 1
/tx_ck ? 0
/tx_ckdata ? 0
/tx_data = 0
/tx_ensymb = 0
/tx_endata = 0
/tx_i = 31
/tx_q = 31

FIG. 3

FIG. 4

FIG. 5

EP 1 346 490 B1

FIG. 7

FIG. 6

/rx_ck = 0

/rx_i = -30

/rx_q = -15

/mf_i

/mf_q

/cross = 28

/dot = -18

/rimp = -21

/rimp-thres

/rimp_pond

## FIG. 8

## FIG. 9

FIG. 10

EP 1 346 490 B1

FIG. 11

FIG. 12

FIG. 13